# EUROPEAN PATENT SPECIFICATION

(11) **EP 4 242 396 B1**
(45) Date of publication and mention of the grant of the patent: **18.09.2024**
(21) Application number: 23159346.8
(22) Date of filing: 01.03.2023
(51) Int. Cl.: E04D 13/03, E06B 3/66

(54) **ROOF WINDOW WITH A GLAZING UNIT**
DACHFENSTER MIT EINER VERGLASUNGSEINHEIT
FENÊTRE DE TOIT AVEC VITRAGE

(30) Priority: 03.03.2022 PL 44053022
(43) Date of publication of application: 13.09.2023
(73) Proprietor: FAKRO PP Sp. z o.o., 33-300 Nowy Sacz (PL)
(72) Inventor: MAJOCH, Mateusz, 33-0300 Nowy Sacz (PL)

(56) References cited:
- EP-A1- 3 101 195
- EP-A2- 2 169 172
- EP-A2- 3 779 094
- WO-A1-2020/147909
- DE-A1- 10 063 815

## Description

The object of the invention comprises a roof window and glass unit with improved thermal insulation.

A glass module designed for attachment in a roof window frame has been disclosed as invention WO2018121830A1. The glass module features additional coated thermal insulation material mounted along edge sections of the glass unit. Thermal insulation along the glass element edges reduces local thermal conductivity along the said edges.

A glass floor skylight with improved insulation properties has also been disclosed as invention US9874018B1. The skylight glass unit is constructed out of three structural glass panes connected to vacuum glass using a spacer frame. Structural glass panes comprise an external part of the glass unit and provide the floor glass skylight with the necessary strength properties.

A roof window comprising a frame and a laminated vacuum insulated glass (VIG) unit attached to the aforementioned frame has been disclosed in application WO2021104964A1. The laminated VIG unit comprises a first glass sheet and a second glass sheet, wherein the first and the second glass sheets are separated by a vacuum space. The space is home to numerous supporting elements. The unit also comprises a polymer laminate layer between the vacuum insulated multiple glazed unit and the unit's external glass pane.

Application EP 3 101 195 A1 discloses a roof window with inner panes being smaller than the laminated outer pane. Application WO 2020/147909 A1 discloses a roof window comprising a VIG unit and a lamination glass sheet.

The invention comprises a roof window with improved thermal insulation properties and in particular within the edge area of that window where thermal bridges occur providing an escape route for heat from the interior. The aim of the invention is a roof window comprising a sash frame with a glass unit mounted in a frame. The sash frame is constructed out of four stiles attached to one another. Each sash frame stile includes an external face.

In the roof window installed position, the external face is oriented towards the outside of the room. The roof window's improved thermal insulation properties stem from the roof window glass unit's construction. The glass unit includes a vacuum insulated multiple glazed unit which constitutes the external glass pane of the roof window's glass unit. The vacuum insulated multiple glazed unit is constructed out of at least two glass sheets hermetically attached to one another, wherein there is at least one spacer element between the glass panes in order to ensure a space between the glass sheets where partial vacuum has been generated. There is at least one glass unit internal glass pane under the vacuum insulated multiple glazed unit, wherein there is a spacer frame between the internal glass pane and the vacuum insulated multiple glazed unit. There is a seal between the spacer frame and internal glass pane edge. The internal glass pane surface area is smaller than the vacuum insulated multiple glazed unit surface area. Then the vacuum insulated multiple glazed unit is at least partially seated on the external faces of the sash frame stiles with glass unit and the internal glass pane is seated in the window frame or there is an insulation profile under the surface of the glass unit external glass pane by the edge of the internal glass pane and the entire glass unit is seated in the window frame. The internal glass pane and vacuum insulated multiple glazed unit 31 in the present embodiment do not have a common edge, but also the internal glass pane and the vacuum insulated multiple glazed unit may have at least one common edge. The roof window also includes shielding profiles which shield the roof window's external circumference. Every shielding profile includes a side arm to shield the external side of the sash frame with the glass unit and an assembly arm attached to that sash frame. The shielding profiles are attached to the roof window so that the assembly arm of each side profile is seated in a frame stile socket, or is seated on the glass unit external glass pane outer surface. The frame stile socket for a shielding profile assembly arm is open from the side of the external face of each frame stile. There is sealing material between the shielding profile and the roof window frame. In one embodiment, the sealing material is between the shielding profile side arm and the vacuum insulated multiple glazed unit in the form of an edge gasket. In the embodiment where the assembly arm is on the vacuum insulated multiple glazed unit external surface, there is sealing material between the assembly arm and the external glass pane. Preferably the sash frame with the glass unit and the frame are profiles made out of plastic and include chambers with chambered insulation profiles inside the said chambers.

The vacuum insulated multiple glazed unit extends the warm air escape path from an interior with a roof window as its surface area is greater than the glass unit interior glass pane. The external glass pane also dissipates cold air along its external surface, blocking its ingression into the interior which significantly improves the thermal insulation properties of the roof window. These changes are illustrated by the window's U_{w} heat transfer coefficient value calculated according to the PN-EN 10077-1 standard. Its value for the previously known roof window equal to 0.76 W/m²K was reduced to 0.51 W/m²K for the same roof window with a vacuum insulated multiple glazed unit as disclosed by the invention. Whereas the linear heat transfer coefficient Ψ_{g} value was reduced from 0.058 W/mK to 0.031 W/mK.

The illustration depicts the invention, with given figures showing the following:
Fig. 1 spatial view of the roof window,
Fig. 2 cross section of sash frame stile and the frame according to the first embodiment,

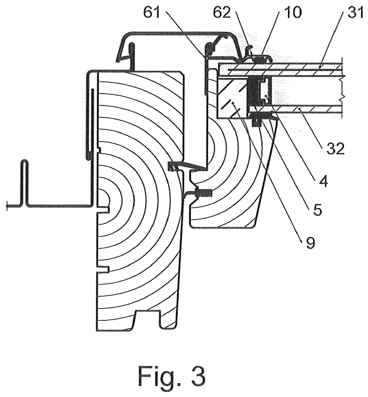

Fig. 3 cross section of roof window according to the second embodiment,
Fig. 4 diagram of the position of the internal glass pane relative to the vacuum insulated multiple glazed unit.

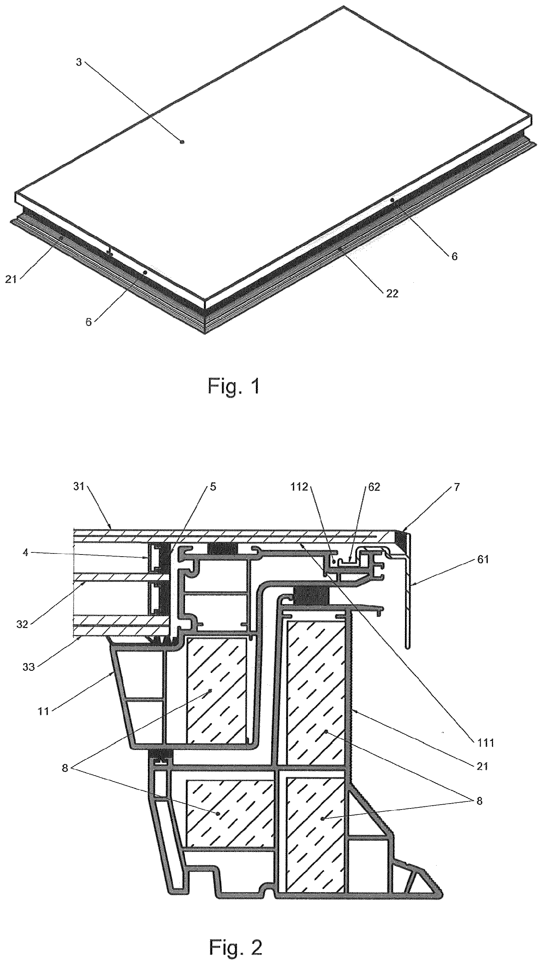

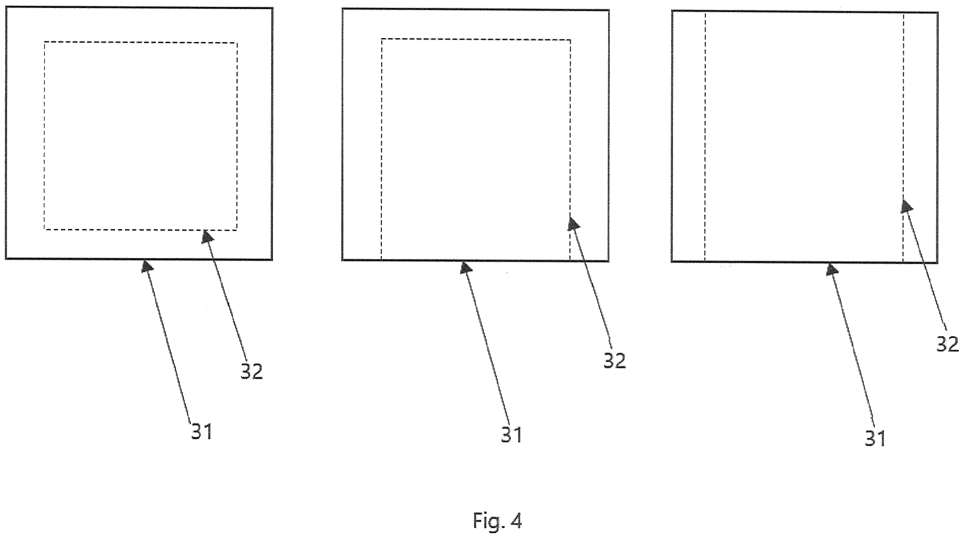

The roof window according to the invention comprising a sashframe, seated in the frame, where sash frame comprising a four stiles 21, 22. The window frame is also constructed out of four stiles 11 attached to one another. Each frame stile includes external face 111. Glass unit 3 is seated in the frame. The external glass pane of glass unit 3 comprises vacuum insulated multiple glazed unit 31 with two internal glass panes 32, 33 underneath it. In the embodiment depicted in Fig. 2, second internal glass pane 33 is constructed out of two glass sheets with a low-emission film between them. All glass unit 3 glass panes are separated by spacer frame 4. Spacer frame 4 for internal glass panes 32, 33 is located by their edge. As the surface area of the vacuum insulated multiple glazed unit is larger than the surface area of the internal glass pane, spacer frame 4 is located at a certain distance from the vacuum insulated multiple glazed unit 31 edge, which at least partially overlaps the external face 111 of frame stiles and internal glass pane 32, 33 is seated within the frame. Additionally, seal 5 is located between the spacer frame and the glass unit's internal glass pane 32, 33 edge. Internal glass pane 32, 33 and vacuum insulated multiple glazed unit 31 in the present embodiment do not have a common edge, but also internal glass pane 32, 33 and vacuum insulated multiple glazed unit 31 may have at least one common edge as depicted in Fig. 4. The roof window includes shielding profiles constructed out of side arm 61 so that edge gasket 7 is located between side arm 61 and the edge of each vacuum pane 31. Shielding profile 6 is attached to each frame stile using assembly arm 62, which is seated in frame stile socket 112 open on the external surface 111 side of each frame stile 11. Roof window frames are chambered frames made out of plastic. Chambered insulation profiles 8, made out of polystyrene for example, may be placed inside the said frame chambers.

In the second embodiment, the roof window comprising a sash frame, seated in the frame, where the sash frame comrpising a four stiles 21, 22. The leaf frame is also constructed out of four stiles 11 attached to one another. The external glass pane of glass unit 3 comprises vacuum insulated multiple glazed unit 31 with internal glass pane 32 underneath it. All glass unit 3 glass panes are separated by spacer frame 4. Spacer frame 4 between internal glass pane 32 and vacuum insulated multiple glazed unit 31 is located by internal glass pane 32 edge. As the surface area of vacuum insulated multiple glazed unit 31 is larger than the surface area of the internal glass pane, spacer frame 4 is located at a certain distance from vacuum insulated multiple glazed unit 31 edge, and insulation profile 9 is located underneath vacuum insulated multiple glazed unit 31 by external glass pane 32 edge. Furthermore, seal 5 is located between the spacer frame and the glass unit's internal glass pane 32 edge. Internal glass pane 32, 33 and vacuum insulated multiple glazed unit 31 in the present embodiment do not have a common edge, but also internal glass pane 32, 33 and vacuum insulated multiple glazed unit 31 may have at least one common edge as depicted in Fig. 4. The roof window includes shielding profiles constructed out of side arm 61. Shielding profile 6 is attached to each frame stile using assembly arm 62, which is seated on the external surface of vacuum insulated multiple glazed unit 31 and gasket 10 is located between assembly arm 62 and the external glass pane.

## Claims

1. Roof window, constructed out of a sash frame with glass unit (3), a frame and said sash frame with glass unit comprising a four stiles (11) attached to one another, the glass unit (3) comprising an external glass pane in the form of vacuum insulated multiple glazed unit (31) and at least one internal glass pane (32, 33) located underneath vacuum insulated multiple glazed unit (31), **characterised in that** internal glass pane (32, 33) surface area is smaller than the surface area of vacuum insulated multiple glazed unit (31) .

2. The window according to claim 1 **characterised in that** there is spacer frame (4) between internal glass panes and that there is seal (5) between internal glass pane (32, 33) edge and spacer frame (4).

3. The window according to claim 1 or 2 **characterised in that** vacuum insulated multiple glazed unit (31) is at least partially seated on external face (111) of frame stiles (11) and the internal glass pane is seated in the frame.

4. The window according to claim 1 or 2, or 3 **characterised in that** the glass unit (3) is entirely seated in the frame and there is insulation profile (9) underneath vacuum insulated multiple glazed unit (31) by internal glass pane edge.

5. The window according to claim 1 or 2, or 3, or 4 **characterised in that** one of the internal glass panes (33) comprising two glass sheets with a low-emission film between them.

6. The window according to claim 1 or 2, or 3, or 4, or 5 **characterised in that** it comprises a shielding profiles (6), which shield the roof window external frame circumference and each shielding profile is constructed out of side arm (61) to shield the external side of the sash frame with the glass unit and assembly arm (62) attached to the sash frame with the glass unit.

7. The window according to claim 6 **characterised in that** assembly arm (62) is seated in frame stile (11) socket (112) open on the external surface (111) side of each frame stile.

8. The roof window according to claim 6 or 7 **characterized in that** gasket (7) is located between side arm (61) and vacuum insulated multiple glazed unit (31) edge.

9. The window according to claim 6 **characterized in that** assembly arm (62) is seated on vacuum insulated multiple glazed unit (31) external surface and gasket (10) is located between assembly arm (62) and vacuum insulated multiple glazed unit (31) external surface.

10. The window according to claim 1 or 2, or 3, or 4, or 5, or 6, or 7, or 8, or 9 **characterized in that** the sash frame with glass unit (3) and the frame are profiles made out of plastic and feature chambers.

11. The window according to claim 10 **characterised in that** there are chambered insulation profiles (8) in frame profile chambers.

12. The roof window according to claim 1 or 2, or 3, or 4, or 5, or 6, or 7, or 8, or 9, or 10, or 11 is **characterized in that** internal glass pane (32, 33) and vacuum insulated multiple glazed unit (31) do not have a common edge.

13. The roof window according to claim 1, or 2, or 3, or 4, or 5, or 6, or 7, or 8, or 9, or 10, or 11 is **characterized in that** internal glass pane (32, 33) and vacuum insulated multiple glazed unit (31) have at least one common edge.

## Patentansprüche

1. Dachfenster, bestehend aus einem Rahmen mit einem Verglasungspaket (3), wobei die Fensterzarge und der Rahmen mit dem Verglasungspaket aus vier miteinander verbundenen Rahmenhölzer (11) besteht und das Verglasungspaket (3) aus einer äußeren Scheibe, die eine vakuumisolierte Thermoglasscheibe (31) ist, und mindestens einer inneren Scheibe (32, 33) besteht, die sich unterhalb der vakuumisolierten Thermoglasscheibe (31) befindet, **dadurch gekennzeichnet, dass** die Oberfläche der Innenscheibe (32, 33) kleiner ist als die Oberfläche der vakuumisolierten Thermoglasscheibe (31).

2. Fenster nach Anspruch 1, **dadurch gekennzeichnet, dass** zwischen den inneren Glasscheiben ein Distanzrahmen (4) und zwischen dem Rand der inneren Scheibe (32, 33) und dem Distanzrahmen (4) eine Dichtung (5) vorhanden ist.

3. Fenster nach Anspruch 1 oder 2, **dadurch gekennzeichnet, dass** die vakuumisolierte Thermoglasscheibe (31) zumindest teilweise in die Außenfläche (111) der Rahmenhölzer (11) eingebettet und die innere Glasscheibe in den Rahmen eingebettet ist.

4. Fenster nach Anspruch 1 oder 2 oder 3, **dadurch gekennzeichnet, dass** das Verglasungspaket vollständig in den Rahmen eingebettet ist und sich unterhalb der vakuumisolierten Thermoglasscheibe (31) ein Isolierprofil (9) am Rand der Innenscheibe befindet.

5. Fenster nach Anspruch 1 oder 2 oder 3 oder 4, **dadurch gekennzeichnet, dass** eine der Innenscheiben (33) aus zwei Glasscheiben besteht, zwischen denen sich eine emissionsarme Beschichtung befindet.

6. Fenster nach Anspruch 1 oder 2 oder 3 oder 4 oder 5, **dadurch gekennzeichnet, dass** es Abdeckprofile (6) aufweist, die den äußeren Umfang des Rahmens des Dachfensters abdecken, und jedes der Abdeckprofile mit einem Seitenarm (61) zum Abdecken der Außenseite des Rahmens mit dem Verglasungspaket und einem Befestigungsarm (62), der an dem Rahmen mit dem Verglasungspaket befestigt wird, ausgebildet ist.

7. Fenster nach Anspruch 6, **dadurch gekennzeichnet, dass** der Befestigungsarm (62) in einer Aufnahme (112) des Rahmenholzes (11) sitzt, die auf der Seite der Außenfläche (111) jedes Rahmenholzes offen ist.

8. Dachfenster nach Anspruch 6 oder 7, **dadurch gekennzeichnet, dass** zwischen dem Seitenrahmen (61) und dem Rand der vakuumisolierten Thermoglasscheibe (31) eine Dichtung (7) vorhanden ist.

9. Fenster nach Anspruch 6, **dadurch gekennzeichnet, dass** der Befestigungsarm (62) auf der Außenfläche der vakuumisolierten Thermoglasscheibe (31) sitzt und sich eine Dichtung (10) zwischen dem Befestigungsarm (62) und der Außenfläche der vakuumisolierten Thermoglasscheibe (31) befindet.

10. Fenster nach Anspruch 1 oder 2 oder 3 oder 4 oder 5 oder 6 oder 7 oder 8 oder 9, **dadurch gekennzeichnet, dass** der Rahmen mit dem Verglasungspaket (3) und die Fensterzarge Profile aus Kunststoff sind und Kammern aufweisen.

11. Fenster nach Anspruch 10, **dadurch gekennzeichnet, dass** die Rahmenprofilkammern aus gekammerten Isolierprofilen (8) bestehen.

12. Dachfenster nach Anspruch 1 oder 2 oder 3 oder 4 oder 5 oder 6 oder 7 oder 8 oder 9 oder 10 oder 11, **dadurch gekennzeichnet, dass** die Innenscheibe (32, 33) und die vakuumisolierte Thermoglasscheibe (31) keinen gemeinsamen Rand haben.

13. Dachfenster nach Anspruch 1 oder 2 oder 3 oder 4 oder 5 oder 6 oder 7 oder 8 oder 9 oder 10 oder 11, **dadurch gekennzeichnet, dass** die Innenscheibe (32, 33) und die vakuumisolierte Thermoglasscheibe (31) mindestens eine gemeinsame Kante aufweisen.

## Revendications

1. Une fenêtre de toit composée d'un cadre avec un ensemble de vitrage (3), d'un cadre de chambranle et le cadre avec l'ensemble de vitrage étant composé de quatre flancs de cadres (11) assemblés, et l'ensemble de vitrage (3) étant composé d'une vitre extérieure qui est un multiple vitrage à isolation sous vide (31) et d'au moins une vitre intérieure (32, 33) située sous le multiple vitrage à isolation sous vide (31), **caractérisée en ce que** la surface de la vitre intérieure (32, 33) est inférieure à la surface du multiple vitrage à isolation sous vide (31).

2. Fenêtre selon la revendication 1, **caractérisée en ce qu'**il y a un cadre espaceur (4) entre les vitres intérieures et qu'il y a un joint (5) entre le bord de la vitre intérieure (32, 33) et le cadre espaceur (4).

3. Fenêtre selon la revendication 1 ou 2, **caractérisée en ce que** le multiple vitrage à isolation sous vide (31) est au moins partiellement encastré dans la surface extérieure (111) des flancs de cadres (11) et que la vitre intérieure est encastrée dans le cadre.

4. Fenêtre selon la revendication 1 ou 2 ou 3, **caractérisée en ce que** l'ensemble de vitrage est entièrement encastré dans le cadre et en dessous du multiple vitrage à isolation sous vide (31), il y a un profilé isolant (9) sur le bord de la vitre intérieure.

5. Fenêtre selon la revendication 1 ou 2 ou 3 ou 4, **caractérisée en ce que** l'une des vitres intérieures (33) est constituée de deux vitres avec un revêtement à faible émissivité entre elles.

6. Fenêtre selon la revendication 1 ou 2 ou 3 ou 4 ou 5, **caractérisée en ce qu'**elle comporte des profilés de recouvrement (6) couvrant le périmètre extérieur du cadre de la fenêtre de toit, chaque profilé de recouvrement étant constitué d'un bras latéral (61), destiné à couvrir le côté extérieur du cadre avec l'ensemble de vitrage, et d'un bras de montage (62) fixé audit cadre avec l'ensemble de vitrage.

7. Fenêtre selon la revendication 6, **caractérisée en ce que** le bras de montage (62) est logé dans le logement (112) du flanc (11) du cadre, ouvert sur le côté de la surface extérieure (111) de chaque flanc de cadre.

8. Fenêtre de toit selon la revendication 6 ou 7, **caractérisée en ce qu'**un joint (7) est prévu entre le bras latéral (61) et le bord du multiple vitrage à isolation sous vide (31).

9. Fenêtre selon la revendication 6, **caractérisée en ce que** le bras de montage (62) est placé sur la surface extérieure du multiple vitrage à isolation sous vide (31) et qu'un joint (10) est prévu entre le bras de montage (62) et la surface extérieure du multiple vitrage à isolation sous vide (31).

10. Fenêtre selon la revendication 1 ou 2 ou 3 ou 4 ou 5 ou 6 ou 7 ou 8 ou 9, **caractérisée en ce que** le cadre avec l'ensemble de vitrage (3) et le chambranle sont des profilés en matière plastique et comportent des chambres.

11. Fenêtre selon la revendication 10, **caractérisée en ce que** les chambres des profilés des cadres contiennent des profilés isolants à chambres (8).

12. Fenêtre de toit selon la revendication 1 ou 2 ou 3 ou 4 ou 5 ou 6 ou 7 ou 8 ou 9 ou 10 ou 11, **caractérisée en ce que** la vitre intérieure (32, 33) et l'ensemble de vitrage à isolation sous vide (31) n'ont pas de bord commun.

13. Fenêtre de toit selon la revendication 1 ou 2 ou 3 ou 4 ou 5 ou 6 ou 7 ou 8 ou 9 ou 10 ou 11, **caractérisée en ce que** la vitre intérieure (32, 33) et le multiple vitrage à isolation sous vide (31) ont au moins un bord commun.
